# EUROPÄISCHE PATENTSCHRIFT

(11) **EP 2 994 372 B1**
(45) Veröffentlichungstag und Bekanntmachung des Hinweises auf die Patenterteilung: **17.01.2018**
(21) Anmeldenummer: 14715831.5
(22) Anmeldetag: 26.03.2014
(51) Int. Cl.: B62D 65/18

(54) **ANLAGE MIT GLIEDERKETTE**
SYSTEM WITH A LINK CHAIN
INSTALLATION DOTÉE D'UNE CHAÎNE À MAILLONS

(30) Priorität: 08.05.2013 DE 102013007852
(43) Veröffentlichungstag der Anmeldung: 16.03.2016
(73) Patentinhaber: Sew-Eurodrive GmbH & Co. KG, 76646 Bruchsal (DE)
(72) Erfinder: SCHEDLER, Dirk, 76646 Bruchsal (DE)
(86) Internationale Anmeldenummer: PCT/EP2014/000812
(87) Internationale Veröffentlichungsnummer: WO 2014/180523

(56) Entgegenhaltungen:
- EP-A1- 1 557 378
- WO-A1-2014/166634
- US-A1- 2003 047 429
- US-A1- 2004 054 435

## Beschreibung

Die Erfindung betrifft eine Anlage mit Gliederkette.

Es ist allgemein bekannt, dass eine Gliederkette als Fördermittel einsetzbar ist. Aus der US 2003/047429 A1 ist eine Anlage nach Anspruch 1 bekannt, wobei die Arbeitshöhe eines transportierten Werkstücks elektrisch anpassbar ist.

Die unter Artikel 54(3) EPÜ fallende WO2014/166634 A1 offenbart eine Anlage mit von einem Plattenband geförderten Werkstückträgern, welche einen Hubtisch, einen Hubtischantrieb, eine Speichereinrichtung für elektrische elektrische Energie zur Versorgung des Hubtischantriebs zum Anheben und Ansenken des Hubtisches und Mittel zur induktiven Kopplung der Speichereinrichtung mit einer Ladeeinrichtung während des Transportes auf dem Plattenband aufweisen.

Die Erfindung liegt daher die Aufgabe zugrunde, eine kontaktlose Versorgung mit Energie zu ermöglichen. Erfindungsgemäß wird die Aufgabe bei der Anlage mit Gliederkette nach den in Anspruch 1 angegebenen Merkmalen gelöst.

Wichtige Merkmale der Erfindung bei der Anlage mit Gliederkette sind, dass mindestens ein Werkstückträger von der Gliederkette gefördert wird,
wobei eine am Werkstückträger angeordnete, insbesondere befestigte, Sekundärwicklung einen elektrischen Verbraucher versorgt,
wobei die Sedundärwicklung induktiv gekoppelt ist an ein Primärleitersystem, insbesondere wobei die Sekundärwicklung kontaktlos und induktiv versorgt ist aus dem Primärleitersystem,
wobei die Gliederkette auf einer Gleitplatte aufliegt und bewegbar ist, wobei die Gleitplatte auf ersten und zweiten Tragplatten aufliegt,
wobei die ersten Tragplatten aus einem weniger magnetisierbaren und/oder weniger magnetisch und/oder elektrisch leitfähigem Stoff als die zweiten Tragplatten gefertigt sind,
wobei die ersten Tragplatten das Primärleitersystem aufnehmen, insbesondere wobei das Primärleitersystem zwischen einer jeweiligen ersten Tragplatte und der Gliederkette und/oder Gleitplatte angeordnet ist.

Von Vorteil ist dabei, dass eine kontaktlose Versorgung mit Energie ermöglicht ist und somit die Arbeitshöhe elektrisch verstellbar ist.

Bei einer vorteilhaften Ausgestaltung ist das Primärleitersystem in Förderrichtung verlegt, insbesondere als parallel zueinander ausgerichtete Linienleiter. Von Vorteil ist dabei, dass eine einfache Verlegung ermöglicht ist.

Bei einer vorteilhaften Ausgestaltung weisen die ersten Tragplatte Nuten auf, in welchen das Primärleitersystem aufgenommen ist. Von Vorteil ist dabei, dass wiederum eine einfache Verlegung ermöglicht ist.

Bei einer vorteilhaften Ausgestaltung ist ein Werkstück vom Werkstückträger aufgenommen. Von Vorteil ist dabei, dass das aufgenommene Werkstück in der gewünschten Arbeitshöhe gehalten ist, insbesondere der Werkstückträger höhenverstellbar ist.

Bei einer vorteilhaften Ausgestaltung umfasst der elektrische Verbraucher einen Elektromotor, insbesondere welcher als Linearaktor ausgebildet ist und/oder welcher als Hubwerksantrieb zur Höhenverstellung des Werkstücks ausgebildet ist, insbesondere wobei der Elektromotor einen Scherenhubtisch des Werkstückträgers antreibt. Von Vorteil ist dabei, dass eine einfache Höhenverstellung realisiert ist.

Bei einer vorteilhaften Ausgestaltung sind die Gliederkette und/oder die Gleitplatte aus einem nicht magnetisch leitfähigen Werkstoff gefertigt, insbesondere Kunststoff. Von Vorteil ist dabei, dass eine niedrige Reibung realisiert ist.

Bei einer vorteilhaften Ausgestaltung sind die ersten Tragplatten aus Kunststoff und/oder Holz gefertigt, insbesondere so dass ihre Tragfähigkeit geringer ist als die Tragfähigkeit der zweiten Tragplatten. Von Vorteil ist dabei, dass die ersten Platten auf nicht magnetisch leitfähigem Material gefertigt sind und somit die induktive Kopplung zwischen Sekundärwicklung und Primärleitersystem im Wesentlichen unbeeinflusst ist.

Bei einer vorteilhaften Ausgestaltung sind die zweiten Tragplatten jeweils als Gitterrost ausgeführt. Von Vorteil ist dabei, dass die zweiten Tragplatten kostengünstig und tragfähig sind.

Bei einer vorteilhaften Ausgestaltung liegen die ersten und zweiten Tragplatten auf Trägern, insbesondere T-Träger und/oder Doppel-T-Trägern, auf, insbesondere wobei die Träger als Querstreben ausgeführt sind, sich also in Querrichtung erstrecken. Von Vorteil ist dabei, dass eine stabile Konstruktion ermöglicht ist.

Bei einer vorteilhaften Ausgestaltung weisen die Träger jeweils eine vom Primärleitersystem weg gerichtet ausgeführte Auskragung auf,

insbesondere wobei die Auskragung jeweils von einer ersten Tragplatte abgedeckt ist. Von Vorteil ist dabei, dass Wirbelstromverluste verringerbar sind.

Bei einer vorteilhaften Ausgestaltung ist die in Querrichtung vorhandene Breite der ersten Tragplatte größer als die entsprechende Breite der Auskragung. Von Vorteil ist dabei, dass die Auskragung abgedeckt ist und der Primärleiter im Bereich der Auskragung gehalten ist.

Bei einer vorteilhaften Ausgestaltung weist der Werkstückträger einen Fußrahmen auf, dessen in Querrichtung vorhandene Breite größer ist als die in Querrichtung vorhandene Breite der ersten Tragplatte, so dass die Gewichtskraft des Werkstückträgers, insbesondere samt Werkstück, über den Fußrahmen, die Gliederkette und die Gleitplatte in die jeweiligen zweiten Tragteile eingeleitet wird. Dabei wird die Toleranz in Querrichtung berücksichtigt, welche durch die Zuführung des Werkstückträgers, insbesondere mittels Rollenbahn, entsteht. Somit überschreitet die Breite des Fußrahmens die Breite der ersten Tragplatte um zumindest den Toleranzbetrag. Von Vorteil ist dabei, dass die Gewichtskraft auf die zweiten Tragteile geleitet wird.

Bei einer vorteilhaften Ausgestaltung ist die Sekundärwicklung an Querstreben befestigt, welche am Fußrahmen befestigt ist. Von Vorteil ist dabei, dass eine einfache Befestigung erreicht ist.

Bei einer vorteilhaften Ausgestaltung ist parallel zu den Linienleitern des Primärleitersystems, insbesondere in Förderrichtung, ein Leckwellenleiter verlegt. Von Vorteil ist dabei, dass eine Datenübertragung ermöglicht ist.

Bei einer vorteilhaften Ausgestaltung ist am Werkstückträger, insbesondere an den am Fußrahmen befestigten Querstreben, eine Antenne befestigt zur Signalübertragung zwischen Leckwellenleiter und Werkstückträger, insbesondere zur Antenne. Von Vorteil ist dabei, dass eine bidirektionale Datenübertragung ermöglicht ist.

Weitere Vorteile ergeben sich aus den Unteransprüchen.

Die Erfindung wird nun anhand von Abbildungen näher erläutert:
In der Figur 1 ist eine erfindungsgemäße Anlage zur Montage von Werkstücken, beispielsweise zur Montage von Verbrennungsmotoren oder Automobilen, in Draufsicht gezeigt, wobei die Werkstücke während der Montage auf einem Werkstückträger 2 bearbeitet werden, um den ein Arbeiter sich herumbewegen kann, also von allen vier Seiten zugänglich ist.

In der Figur 2 ist ein zugehöriger Querschnitt gezeigt.

In der Figur 3 ist eine zugehörige schematisierte Ansicht von oben auf den Bereich des Werkstückträgers 2 gezeigt.

In der Figur 4 ist ein anderes Ausführungsbeispiel gezeigt, wobei statt der Auskragung eine Abschirmung eingesetzt ist.

In der Figur 5 ist eine Draufsicht auf die Abschirmung gezeigt.

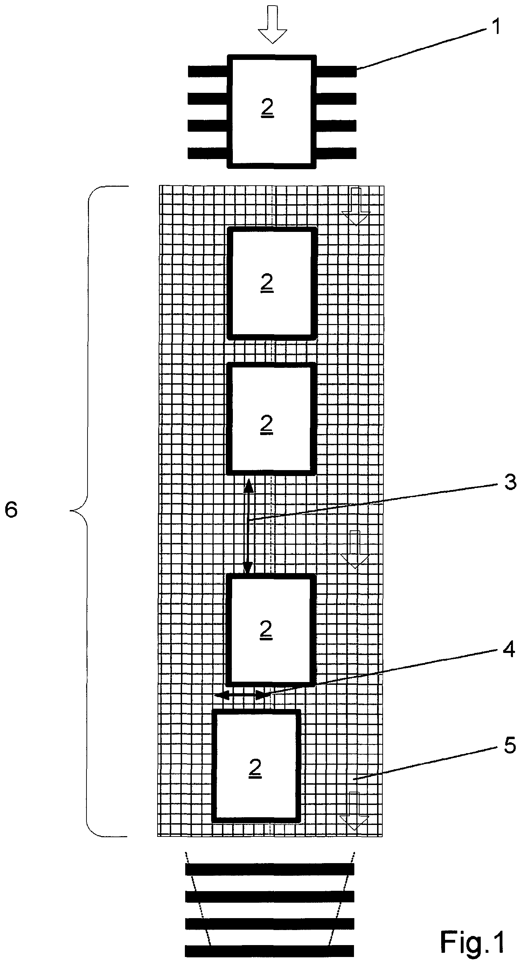

Wie in Figur 1 gezeigt, wird der Werkstückträger 2 mittels einer Rollenbahn, also Rollenförderers 1 einer Gliederkette zugeführt.

Die Gliederkette 5 gleitet auf einer Gleitplatte 23 und transportiert dabei den Werkstückträger 2 in Förderrichtung. Das Aufsetzen des jeweiligen Werkstückträgers 2 erfolgt dabei im Vergleich zu den in Förderrichtung hintereinander folgenden Werkstückträgern 2 jeweils mit einer Toleranz 3 in Förderrichtung und mit einer Toleranz 4 in Querrichtung hierzu. Die Toleranz wird durch die zuführende Rollenbahn 1 bestimmt.

Während der Förderung mittels der Gliederkette wird kontaktlos Energie und gegebenenfalls Daten an den Werkstückträger 2 übertragen. Dies erfolgt also im Bereich 6. In diesem Bereich 6 ist es also ermöglicht, einen elektrischen Verbraucher des Werkstückträgers 2 induktiv zu versorgen. Der Verbraucher ist beispielsweise ein Elektromotor, welcher einen Scherenhubtisch antreibt. Hierzu weist der Werkstückträger 2 an seiner Unterseite eine Sekundärwicklung 20 auf, welche induktiv koppelbar ist an den in Förderrichtung langgestreckt verlegten als Primärleiter wirksamen Linienleiter 26. Somit ist durch den Scherenhubtisch das auf dem Werkstückträger 2 angeordnete Werkstück höhenverstellbar. Der Bearbeiter kann sich von allen Seiten dem Werkstück nähern und dessen Höhe verstellen. Außerdem wird der Bearbeiter zusammen mit dem Werkstückträger 2 und dem darauf befindlichen Werkstück auf der Gliederkette in Förderrichtung transportiert.

Die Gliederkette besteht aus vielen miteinander verbundenen Gliederteilen und wird an der Oberseite in Förderrichtung bewegt und im nicht sichtbaren Unterbereich zurück.

Die Rollenbahn 1 weist Rollen auf, deren Achse in Querrichtung ausgerichtet ist. Die Rollen sind jeweils entweder als aktiv angetriebene oder als passive, also nur gelagerte, Rolle ausgeführt.

Mittels eines in Förderrichtung verlegten Leckwellenleiters und einer am Werkstückträger 2 angeordneten Antenne ist eine Datenübertragung ermöglicht zwischen Werkstückträger und einer stationär angeordneten Einheit.

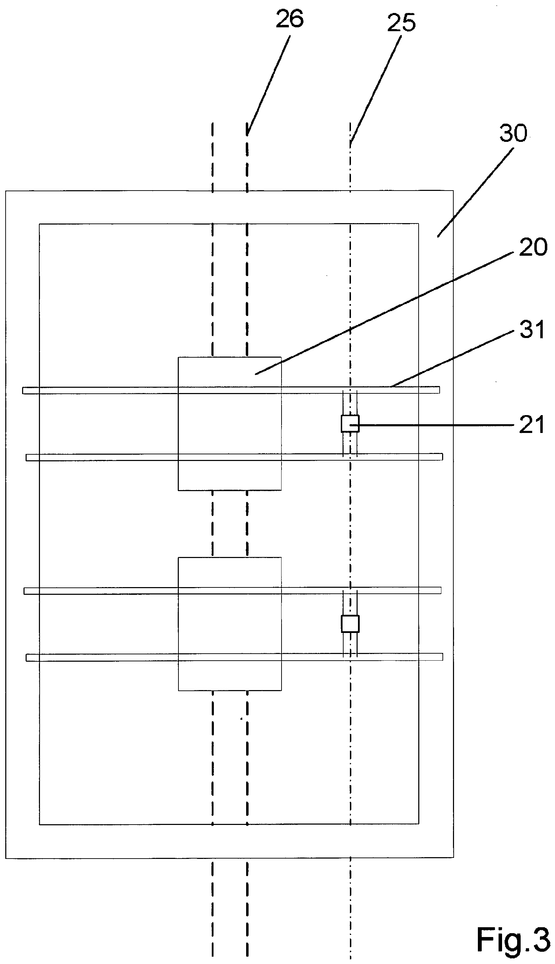

Wie in Figur 3 gezeigt, weist der Werkstückträger 2 einen Fußrahmen zur Gewichtskraftaufspreizung und elektromagnetischen Abschirmung auf, Der Fußrahmen ist rechteckförmig ausgeführt.

Der Fußrahmen überträgt die Gewichtskraft des Werkstückträgers 2 an die Gliederkette. In Querrichtung sind Querstreben 31 an den in Förderrichtung sich erstreckenden Schenkeln des Fußrahmens 30 befestigt, wobei die Sekundärwicklung mittels ihres Spulenträgers an den Querstreben 31 befestigt ist. Außerdem ist auch die Antenne 21 für Nahfeldübertragung an den Querstreben 31 befestigt.

Das Primärleitersystem besteht aus einem Hinleiter und Rückleiter, welche jeweils als Linienleiter verlegt sind und parallel verlaufen. Die Abweichung der Sekundärwicklung 20 in Querrichtung entspricht der Toleranz 4.

Der Fußrahmen schirmt die zwischen der Antenne 21 und dem Leckwellenleiter 25 übertragene elektromagnetische Strahlung ab sowie das zur Energieversorgung übertragene magnetische Wechselfeld.

Durch die Breite des Fußrahmens wird die Gewichtskraft entsprechend breit verteilt in Querrichtung.

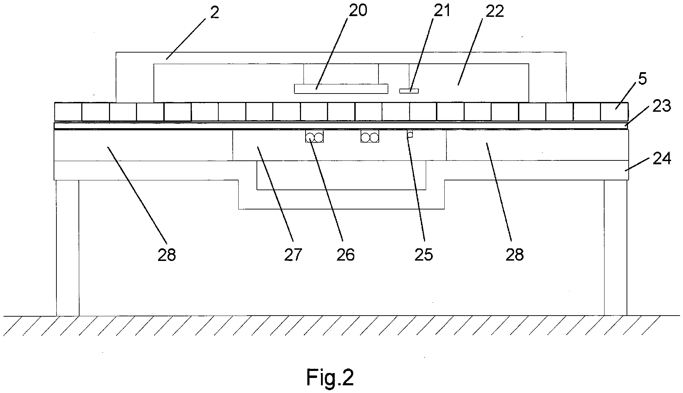

Wie in Figur 2 gezeigt, gleitet die Gliederkette 5 auf einer Gleitplatte 23, die vorzugsweise aus Kunststoff gefertigt ist oder aus einem anderen magnetisch und/oder elektrisch nichtleitfähigen Stoff.

Die Gleitplatte 23 weist vorzugsweise keine Ausnehmungen auf und liegt auf einer aus Tragplatten 27, 28 gebildeten Schicht auf. Hierbei sind die Tragplatten 27, 28 in jeweils derselben Ebene angeordnet.

Mittig zum als Primärleiter wirksamen Linienleiter 26 werden in Förderrichtung hintereinander Tragplatten 27 aus elektrisch und magnetisch nicht leitfähigem Material, insbesondere aus Holz oder Kunststoff, angeordnet. In Querrichtung angrenzend werden metallische Tragplatten 28, insbesondere Gitterrost aus Stahl, angeordnet. Somit ist eine hohe Tragfähigkeit vorhanden.

Die Tragplatten 27, 28 sind von In Querrichtung sich erstreckenden Trägern 24, insbesondere T-Trägern, getragen, auf welche die Tragplatten 27, 28 aufgelegt sind. Die Träger 24 sind aus Stahl ausgeführt und weisen im Bereich der nicht magnetisch leitfähigen Tragplatten 27 eine vom Werkstückträger 2 abgewandt gerichtete insbesondere U-förmige Auskragung, also einen Kragabschnitt, auf. Somit ist ein Mindestabstand zwischen Linienleiter 24 und Träger 24 einhaltbar.

Der Linienleiter 26 ist in einer Nut der Tragplatte 27 eingelegt, wobei die Nut in Förderrichtung verläuft.

Die Auskragung verläuft also nach unten gerichtet. Sie ist auch mit technisch äquivalenten Mitteln ausführbar. Beispielsweise ist sie C-förmig ausführbar und/oder mehrstückig, also mehrteilig, ausführbar.

Die Auskragung erstreckt sich in Querrichtung weniger als die Tragplatte 27, so dass diese auf dem Träger 24 aufliegt und die Auskragung abdeckt. Bei Ausführung aus Holz oder Kunststoff ist ein Erzeugen der den Linienleiter 24 aufnehmenden Nut sehr einfach ausführbar.

Die Breite der Tragplatten 27 in Querrichtung gesehen ist also größer als die Auskragung, welche wiederum das Primärleitersystem in Querrichtung von unten gesehen überdeckt.

Die Breite des Fußrahmens 30 in Querrichtung ist breiter als die Tragplatte 27, so dass der Fußrahmen mit seinen beiden längeren Rechteckseiten auf den metallischen Tragplatte 28 aufliegt, die jeweils eine höhere Tragfähigkeit aufweise als die jeweilige Tragplatte 27.

Die Träger 24 wiederum liegen auf einer Unterkonstruktion auf, die im Boden angeordnet ist. Die Unterkonstruktion ist vorzugsweise aus Stahl.

Die Gliederkette besteht aus Kettengliedern, die jeweils mit ihren nächstbenachbarten Kettengliedern verbunden sind, insbesondere wobei im Verbindungsbereich jeweils ein Drehgelenk oder zumindest ein Formschluss mit Drehspiel vorgesehen ist.

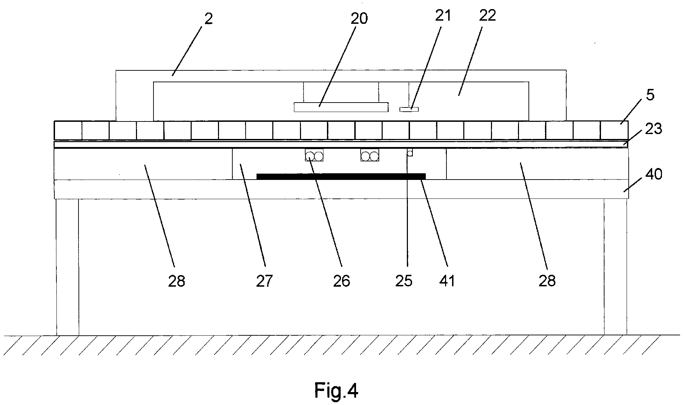

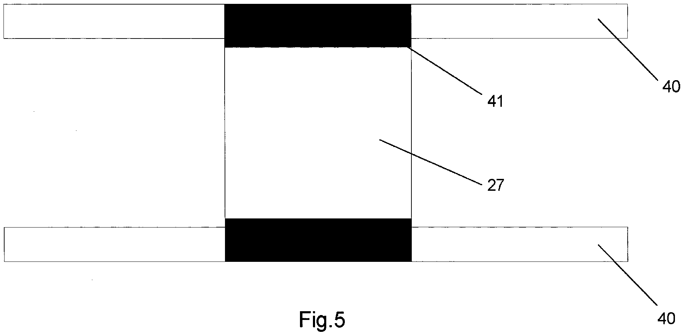

Bei einem weiteren erfindungsgemäßen Ausführungsbeispiel ist wie in Figur 4 und 5 gezeigt, keine Auskragung im Träger 24 vorgesehen sondern der Träger 40 erstreckt sich gerade. Zwischen dem Primärleitersystem , also den Linienleitern 26 und dem Träger 40 ist eine Aluminiumplatte 41 vorgesehen, die die Verluste verkleinert. Wie in Figur 5 gezeigt, muss die Aluminiumplatte 41 nur den Träger 40 abdecken.

### Bezugszeichenliste

1 Rollenförderer, insbesondere Rollenbahn
2 Werkstückträger, insbesondere umfassend Scherenhubtisch zum Anheben des Werkstücks
3 Toleranz in Förderrichtung
4 Toleranz in Querrichtung
5 Gliederkette, insbesondere aus Kunststoff
6 Förderstreckenabschnitt umfassend kontaktlose Energie und/oder Datenübertragung
20 Sekundärwicklung
21 Antenne für Nahfeldübertragung
23 elektromagnetisch abgeschirmter Bereich
24 Träger, insbesondere T-Träger, mit Auskragung, also mit Kragabschnitt
25 Leckwellenleiter
26 Linienleiter als Primärleiter
27 Tragplatte aus elektrisch und magnetisch nicht leitfähigem Material, insbesondere aus Holz oder Kunststoff
28 metallische Tragplatte, insbesondere Gitterrost aus Stahl
30 Fußrahmen des Werkstückträgers 2 zur Gewichtskraftaufspreizung und elektromagnetischen Abschirmung
31 Querstrebe zur Befestigung der Sekundärwicklung 20 und der Antenne 21

## Patentansprüche

1. Anlage mit einer Gliederkette (5), mit einer Gleitplatte (23), auf welcher die Gliederkette (5) aufliegt und bewegbar ist, und mit mindestens einem Werkstückträger (2), welcher von der Gliederkette (5) gefördert wird und einen elektrischen Verbraucher aufweist,
**dadurch gekennzeichnet, dass**
eine am Werkstückträger (2) angeordnete, insbesondere befestigte, Sekundärwicklung (20) den elektrischen Verbraucher versorgt, wobei die Sekundärwicklung (20) induktiv an ein Primärleitersystem (26) gekoppelt ist, so dass die Sekundärwicklung (20) kontaktlos und induktiv aus dem Primärleitersystem (26) versorgt ist, wobei die Gleitplatte (23) auf ersten und zweiten Tragplatten (27; 28) aufliegt, wobei die ersten Tragplatten (27) aus einem weniger magnetisierbaren und/oder weniger magnetisch und/oder elektrisch leitfähigem Stoff als die zweiten Tragplatten (28) gefertigt sind,
wobei die ersten Tragplatten (27) das Primärleitersystem (26) aufnehmen, insbesondere wobei das Primärleitersystem zwischen einer jeweiligen ersten Tragplatte (27) und der Gliederkette (5) und/oder Gleitplatte (23) angeordnet ist.

2. Anlage nach Anspruch 1,
**dadurch gekennzeichnet, dass**
das Primärleitersystem (26) in Förderrichtung verlegt ist, insbesondere als parallel zueinander
ausgerichtete Linienleiter.

3. Anlage nach mindestens einem der vorangegangenen Ansprüche,
**dadurch gekennzeichnet, dass**
die ersten Tragplatte (27) Nuten aufweisen, in welchen das Primärleitersystem (26) aufgenommen ist.

4. Anlage nach mindestens einem der vorangegangenen Ansprüche,
**dadurch gekennzeichnet, dass**
ein Werkstück vom Werkstückträger (2) aufgenommen ist.

5. Anlage nach mindestens einem der vorangegangenen Ansprüche,
**dadurch gekennzeichnet, dass**
der elektrische Verbraucher einen Elektromotor umfasst, insbesondere welcher als Linearaktor ausgebildet ist und/oder welcher als Hubwerksantrieb zur Höhenverstellung des Werkstücks ausgebildet ist, insbesondere wobei der Elektromotor einen Scherenhubtisch des Werkstückträgers (2) antreibt.

6. Anlage nach mindestens einem der vorangegangenen Ansprüche,
**dadurch gekennzeichnet, dass**
die Gliederkette (5) und/oder die Gleitplatte (23) aus einem nicht magnetisch leitfähigen Werkstoff gefertigt sind, insbesondere Kunststoff.

7. Anlage nach mindestens einem der vorangegangenen Ansprüche,
**dadurch gekennzeichnet, dass**
die ersten Tragplatten (27) aus Kunststoff und/oder Holz gefertigt sind, insbesondere so dass ihre Tragfähigkeit geringer ist als die Tragfähigkeit der zweiten Tragplatten (28).

8. Anlage nach mindestens einem der vorangegangenen Ansprüche,
**dadurch gekennzeichnet, dass**
die zweiten Tragplatten (28) jeweils als Gitterrost ausgeführt sind.

9. Anlage nach mindestens einem der vorangegangenen Ansprüche,
**dadurch gekennzeichnet, dass**
die erste und zweiten Tragplatten (27; 28) auf Trägern (24), insbesondere T-Träger und/oder Doppel-T-Trägern, aufliegen, insbesondere wobei die Träger (24) als Querstreben (31) ausgeführt sind, sich also in Querrichtung erstrecken.

10. Anlage nach Anspruch 9,
**dadurch gekennzeichnet, dass**
die Träger (24) jeweils eine vom Primärleitersystem (26) weg gerichtet ausgeführte Auskragung
aufweisen,
insbesondere wobei die Auskragung jeweils von einer ersten Tragplatte (27) abgedeckt ist.

11. Anlage nach Anspruch 10,
**dadurch gekennzeichnet, dass**
die in Querrichtung vorhandene Breite der ersten Tragplatte (27) größer ist also die entsprechende Breite der Auskragung.

12. Anlage nach mindestens einem der vorangegangenen Ansprüche,
**dadurch gekennzeichnet, dass**
der Werkstückträger (2) einen Fußrahmen (30) aufweist, dessen in Querrichtung vorhandene Breite größer ist als die in Querrichtung vorhandene Breite der ersten Tragplatte (27), so dass die Gewichtskraft des Werkstückträgers (2), insbesondere samt Werkstück, über den Fußrahmen (30), die Gliederkette (5) und die Gleitplatte (23) in die jeweiligen zweiten Tragplatte (28) eingeleitet wird.

13. Anlage nach mindestens einem der vorangegangenen Ansprüche 9-12,
**dadurch gekennzeichnet, dass**
die Sekundärwicklung (20) an Querstreben (31) befestigt ist, welche am Fußrahmen (30) befestigt ist.

14. Anlage nach mindestens einem der vorangegangenen Ansprüche 2-13,
**dadurch gekennzeichnet, dass**
parallel zu den Linienleitern des Primärleitersystems (26), insbesondere in Förderrichtung, ein Leckwellenleiter verlegt ist.

15. Anlage nach Anspruch 14,
**dadurch gekennzeichnet, dass**
am Werkstückträger (2), insbesondere an den am Fußrahmen (30) befestigten Querstreben (31), eine Antenne (21) befestigt ist zur Signalübertragung zwischen Leckwellenleiter (25) und Werkstückträger (2), insbesondere zur Antenne (21).

## Claims

1. An installation with a link chain (5), with a sliding plate (23) on which the link chain (5) lies and is movable, and with at least one workpiece carrier (2) which is conveyed by the link chain (5) and has an electrical consumer,
**characterised in that**
a secondary winding (20) arranged, in particular fastened, on the workpiece carrier (2) supplies power to the electrical consumer,
the secondary winding (20) being coupled inductively to a primary conductor system (26), so that power is supplied to the secondary winding (20) in contactless manner and inductively from the primary conductor system (26),
with the sliding plate (23) lying on first and second supporting plates (27; 28),
with the first supporting plates (27) being manufactured from a less magnetisable and/or less magnetic and/or electrically conductive material than the second supporting plates (28),
with the first supporting plates (27) receiving the primary conductor system (26), in particular with
the primary conductor system being arranged between a respective first supporting plate (27) and the link chain (5) and/or sliding plate (23).

2. An installation according to Claim 1,
**characterised in that**
the primary conductor system (26) is laid in the direction of conveyance, in particular as line conductors oriented parallel to each other.

3. An installation according to at least one of the preceding claims,
**characterised in that**
the first supporting plates (27) have [sic] grooves in which the primary conductor system (26) is received.

4. A plant according to at least one of the preceding claims,
**characterised in that**
a workpiece is received by the workpiece carrier (2).

5. An installation according to at least one of the preceding claims,
**characterised in that**
the electrical consumer comprises an electric motor, in particular which is designed as a linear actuator and/or which is designed as a lifting-gear drive for vertically adjusting the workpiece, in particular with the electric motor driving a scissor lift table of the workpiece carrier (2).

6. An installation according to at least one of the preceding claims,
**characterised in that**
the link chain (5) and/or the sliding plate (23) are manufactured from a non-magnetically conductive material, in particular plastics material.

7. An installation according to at least one of the preceding claims,
**characterised in that** ,
the first supporting plates (27) are manufactured from plastics material and/or wood, in particular so that their load-bearing ability is less than the load-bearing ability of the second supporting plates (28).

8. An installation according to at least one of the preceding claims,
**characterised in that**
the second supporting plates (28) are embodied in each case as gratings.

9. An installation according to at least one of the preceding claims,
**characterised in that**
the first and second supporting plates (27; 28) lie on beams (24), in particular T-beams and/or I-beams, in particular wherein the beams (24) are embodied as transverse struts (31), i.e. extend in the transverse direction.

10. An installation according to Claim 9,
**characterised in that**
the beams (24) in each case have a projection directed away from the primary conductor system (26),
in particular with the projection being covered in each case by a first supporting plate (27).

11. An installation according to Claim 10,
**characterised in that**
the width of the first supporting plate (27) which is present in the transverse direction is greater than the corresponding width of the projection.

12. An installation according to at least one of the preceding claims,
**characterised in that**
the workpiece carrier (2) has a base frame (30), the width of which which is present in the transverse direction is greater than the width of the first supporting plate (27) which is present in the transverse direction, so that the weight of the workpiece carrier (2), in particular plus workpiece, is introduced into the respective second supporting plate (28) via the base frame (30), the link chain (5) and the sliding plate (23).

13. An installation according to at least one of the preceding Claims 9 - 12,
**characterised in that**
the secondary winding (20) is fastened to transverse struts (31) which are fastened to the base frame (30).

14. An installation according to at least one of the preceding Claims 2 - 13,
**characterised in that**
a leaky-wave conductor is laid parallel to the line conductors of the primary conductor system (26), in particular in the direction of conveyance.

15. An installation according to Claim 14,
**characterised in that**
an antenna (21) is fastened on the workpiece carrier (2), in particular on the transverse struts (31) fastened to the base frame (30), for transmitting signals between the leaky-wave conductor (25) and workpiece carrier (2), in particular to the antenna (21).

## Revendications

1. Installation dotée d'une chaîne à maillons (5), comprenant une platine de glissement (23) sur laquelle ladite chaîne à maillons (5) repose et est douée de mobilité, et au moins un porte-pièces (2) convoyé par ladite chaîne à maillons (5) et muni d'un consommateur électrique,
**caractérisée par le fait**
**qu'**un enroulement secondaire (20), disposé et notamment fixé au porte-pièces (2), alimente le consommateur électrique,
ledit enroulement secondaire (20) étant couplé inductivement à un système de conducteurs primaires (26), de telle sorte que ledit enroulement secondaire (20) soit alimenté à partir dudit système de conducteurs primaires (26), sans contact et en mode inductif,
la platine de glissement (23) reposant sur des premières et secondes platines de support (27 ; 28),
les premières platines de support (27) étant fabriquées en un matériau moins magnétisable et/ou moins magnétiquement perméable et/ou moins électriquement conducteur que celui des secondes platines de support (28),
lesdites premières platines de support (27) recevant ledit système de conducteurs primaires (26), sachant notamment que
ledit système de conducteurs primaires est interposé entre une première platine de support respective (27), et la chaîne à maillons (5) et/ou ladite platine de glissement (23).

2. Installation selon la revendication 1,
**caractérisée par le fait que**
le système de conducteurs primaires (26) est implanté dans la direction de convoyage, en particulier sous la forme de conducteurs de ligne orientés avec parallélisme mutuel.

3. Installation selon au moins l'une des revendications précédentes,
**caractérisée par le fait que**
les premières platines de support (27) sont pourvues de rainures dans lesquelles le système de conducteurs primaires (26) est logé.

4. Installation selon au moins l'une des revendications précédentes, **caractérisée par le fait**
**qu'**une pièce à usiner est reçue par le porte-pièces (2).

5. Installation selon au moins l'une des revendications précédentes, **caractérisée par le fait que**
le consommateur électrique inclut un moteur électrique réalisé, en particulier, en tant qu'actionneur linéaire et/ou réalisé en tant qu'entraînement d'un mécanisme de levage dévolu au réglage en hauteur de la pièce à usiner, sachant notamment que ledit moteur électrique entraîne une table élévatrice à parallélogramme articulé du porte-pièces (2).

6. Installation selon au moins l'une des revendications précédentes, **caractérisée par le fait que**
la chaîne à maillons (5) et/ou la platine de glissement (23) est (sont) fabriquée(s) en un matériau dépourvu de perméabilité magnétique, notamment en matière plastique.

7. Installation selon au moins l'une des revendications précédentes, **caractérisée par le fait que**
les premières platines de support (27) sont fabriquées en matière plastique et/ou en bois, en particulier de façon telle que leur aptitude à supporter des charges soit moindre que l'aptitude des secondes platines de support (28) à supporter des charges.

8. Installation selon au moins l'une des revendications précédentes, **caractérisée par le fait que**
les secondes platines de support (28) sont respectivement réalisées en tant que caillebotis.

9. Installation selon au moins l'une des revendications précédentes, **caractérisée par le fait que**
les premières et secondes platines de support (27 ; 28) reposent sur des supports (24), en particulier des supports en T et/ou des supports en double T, sachant notamment que lesdits supports (24) sont réalisés sous la forme d'entretoises transversales (31), c'est-à-dire s'étendent dans le sens transversal.

10. Installation selon la revendication 9,
**caractérisée par le fait que**
les supports (24) sont respectivement dotés d'une zone saillante réalisée avec éloignement par rapport au système de conducteurs primaires (26), sachant notamment que ladite zone saillante est recouverte par une première platine de support respective (27).

11. Installation selon la revendication 10,
**caractérisée par le fait que**
la largeur dont la première platine de support (27) est pourvue, dans le sens transversal, est supérieure à la largeur correspondante de la zone saillante.

12. Installation selon au moins l'une des revendications précédentes, **caractérisée par le fait que**
le porte-pièces (2) est doté d'un cadre d'embase (30) dont la largeur, dans le sens transversal, est supérieure à la largeur dont la première platine de support (27) est pourvue dans le sens transversal, de sorte que la force proportionnelle au poids dudit porte-pièces (2), englobant notamment la pièce à usiner, est introduite dans la seconde platine de support respective (28) par l'intermédiaire dudit cadre d'embase (30), de la chaîne à maillons (5) et de la platine de glissement (23).

13. Installation selon au moins l'une des revendications précédentes 9-12, **caractérisée par le fait que**
l'enroulement secondaire (20) est fixé à des entretoises transversales (31) fixées au cadre d'embase (30).

14. Installation selon au moins l'une des revendications précédentes 2-13, **caractérisée par le fait**
**qu'**un guide d'ondes de fuite est implanté parallèlement aux conducteurs de ligne du système de conducteurs primaires (26), en particulier dans la direction de convoyage.

15. Installation selon la revendication 14,
**caractérisée par le fait**
**qu'**une antenne (21) est fixée au porte-pièces (2), en particulier aux entretoises transversales (31) fixées au cadre d'embase (30), en vue de la transmission de signaux entre le guide (25) d'ondes de fuite et ledit porte-pièces (2), notamment vers ladite antenne (21).
